# NEUE EUROPÄISCHE PATENTSCHRIFT

(11) **EP 0 189 806 B2**
(45) Veröffentlichungstag und Bekanntmachung des Hinweises auf die Entscheidung über den Einspruch: **03.08.1994**
(45) Hinweis auf die Patenterteilung: 05.07.1989
(21) Anmeldenummer: 86100648.4
(22) Anmeldetag: 18.01.1986
(51) Int. Cl.: B23K 26/08, B23K 31/00

(54) **Verfahren zum Stumpfschweissen von mindestens einseitig verzinkten, insbesondere tiefziehfähigen Stahlblechen oder Stahlbändern**
Method of butt welding at least one-side zinc-coated, especially deep-drawable steel sheets or steel bands
Méthode pour aboucher en particulier des tôles d'acier ou des feuillards d'acier aptes à l'emboutissage profond et galvanisés au moins d'un côté

(30) Priorität: 25.01.1985 DE 3502368
(43) Veröffentlichungstag der Anmeldung: 06.08.1986
(73) Patentinhaber: Thyssen Stahl Aktiengesellschaft, 47166 Duisburg (DE)
(72) Erfinder: Frings, Adam, D-4300 Essen (DE); Prange, Wilfried, D-4220 Dinslaken (DE)
(74) Vertreter: Cohausz & Florack Patentanwälte

(56) Entgegenhaltungen:
- EP-A- 245 145
- EP-A- 0 098 306
- EP-A- 0 117 751
- EP-A- 0 151 848
- CH-A- 390 658
- CH-A- 593 757
- DE-C- 1 116 034
- US-A- 3 969 604
- US-A- 4 315 132
- Metals Handbook, 8th Edition, Vol. 4, Forming (1969),S.36
- Materials Processing-Theory and Practices, Vol. 3, "Laser Materials Processing", edited by Michael Bass, Center for Laser Studies, Los Angeles, USA 1983 (Seiten 115- 117, 120-125, 128-137, 196-200)
- LASERTECHNIK, "Eine Einführung", 2. Auflage, Dr. Alfred Hüthig Verlag Heidelberg 1984 (Seiten 344-345, 350-351)
- WERK- UND ZUSATZWERKSTOFFE, METALLURGIE DES SCHWEISSENS "Probleme beim Lichtbogenschweissen feuerverzinkter Stähle",Dipl.Ing. P.Schmidt u. Dipl.Ing. D. Schulten, DVS Verlag Düsseldorf 1962 (Seiten 59-68)
- WELDING ENGINEER, Oct. 1972, "Welding Zinc Coated Steels", E. N. Gregory 1972 Seiten 37, 38 u. 41)
- SCHWEISSTECHNIK, München 1959, 2. Auflage, Dr.-Ing. Erich Sudasch (Seiten 307 und 308)
- PT-LS, Längsnahtspannbank 1. Jänner 1985
- Messer- Griesheim Handbuch 1977 (Seiten 58,59)
- Offenkundige Vorbenutzung (Angebot Messer-Griesheim vom 29.11.1984)
- J. Ruge, "Handbuch der Schweisstechnik", zweite neu bearbeitete Auflage, Band II: Verfahren und Fertigung, Springer-Verlag Berlin, Heidelberg, New York 1980, Seite 210
- Informationsblatt der Fa. Messer-Griesheim "Formiergas" vom März 1981
- G. Aichele "Schutzgasschweissen- Verfahren, Anwendung, Wirtschaftlichkeit", herausgegeben von der Fa. Messer-Griesheim, 3. Auflage von 1976, Seite 30

## Beschreibung

Die Erfindung bezieht sich auf ein Verfahren zum Herstellen tiefziehfähiger oder pressbarer verzinkter Stahlbleche mit rechteckigen Schnittkanten durch Stumpfschweissen mittels Laserstrahl.

Die Verarbeiter von verzinkten Blechen verlangen für bestimmte Zwecke, z. B. für durch Tiefziehen herzustellende Formplatten, Bleche mit einer Breite, für die die heute zur Verfügung stehenden Verzinkungsanlagen nicht ausgelegt sind. Deshalb hat man sich damit beholfen, zwei oder mehr Bleche stumpf zusammenzuschweissen. Die Herstellung solcher Bleche nach herkömmlichen Stumpfschweissverfahren macht eine Nachbearbeitung der Schweissnaht erforderlich, weil es nicht möglich ist, eine fürdie Weiterverarbeitung (Tiefziehen) geeignete blechebene Schweissnaht zu erhalten, und weil der Korrosionsschutz im Bereich der Schweissnaht fehlt. Insbesondere treten bei den herkömmlichen Verfahren Unregelmässigkeiten in der Dicke der Schweissnaht auf. Derart hergestellte Bleche eigneten sich nicht zur unmittelbaren Weiterverarbeitung zu Formteilen durch Tiefziehen oder Pressen, weil derartige Bleche das Werkzeug beschädigen oder der Umformvorgang nicht mit der erforderlichen Präzision durchgeführt werden kann.

Bei einem der bekannten Verfahren zum Stumpfschweissen von verzinkten Blechen wird unter Zugabe von Füllmaterial (Schweissdraht) die Schweissnaht mittels Elektronenstrahl hergestellt. Um eine für die Weiterverarbeitung geeignete Qualität zu erhalten, war es notwendig, die Schweissnaht durch Schleifen zu ebnen. Darüber hinaus ergibt sich beim Schweissen mit Elektronenstrahl nicht nur im Bereich der Schweissnaht sondern auch in verhältnismässig breiten Bereichen neben der Schweissnaht ein nicht korrosionsgeschützter Bereich, weil das Zink wegen der hohen Schweisstemperatur verdampft. Deshalb ist es notwendig, nach dem Schweissen nicht nur die Schweissnaht sondern auch die von Zinkfreigelegten Bereiche mit einem korrosionsgeschützten Überzug zu versehen. Derartige Massnahmen stellen einen Behelf dar und befriedigen nicht die Verarbeiter, die sich eine vollflächig korrosionsgeschützte, zum Tiefziehen geeignete Blechplatte wünschen.

Bei einem anderen bekannten Verfahren zum Stumpfschweissen von verzinkten Blechen und Bändern mittels Laserstrahl werden die im wesentlichen rechteckigen Schneidkanten gezielt auf einen bestimmten Abstand gebracht, so dass ein durchgehender Schweissspalt entsteht, der durch aufgeschmolzenes Zusatzmaterial (Schweissdraht) aufgefüllt wird (EP-A 0 098 306 und EP-A 0 117 751). Ein solches Verfahren zeichnet sich gegenüber einem Stumpfschweissverfahren mittels Elektronenstrahl dadurch aus, dass der Laserstrahl besser gerichtet werden kann. Bei diesem Verfahren wird deshalb nur der Schweissdraht, der einen grösseren oder kleineren Durchmesser als die Schweissfuge haben kann, unmittelbar mit dem Laserstrahl beaufschlagt. Die miteinander zu verschweissenden Bleche werden deshalb nur über die Schweisswärme des aufgeschmolzenen Schweissdrahtes aufgeschmolzen. Der Nachteil bei diesem Verfahren besteht darin, dass eine verhältnismässig breite, nicht korrosionsgeschützte, erhabene Schweissnaht entsteht, die durch mechanische Oberflächenbearbeitung blecheben gemacht werden muss und anschliessend einer Korrosionsschutzbehandlung unterzogen werden muss.

Ferner ist ein Verfahren zum Herstellen von rohrförmigen Körpern für Konservendosen bekannt, bei dem die Längskanten eines Blechbandes durch Stumpfschweissen mittels eines Laserstrahls miteinander verschweisst werden. Für solche Anwendungen kann ein Korrosionsschutz in Form einer Chromnickel- oder Zinnlegierungsschicht in einer Dicke von rund 0,1 µ vorgesehen sein. Im Vergleich dazu ist die, beispielsweise bei Automobilblechen übliche Zinkbeschichtung 5 bis 10 µ dick. Wegen dieser geringen Schichtdicke stellt sich bei diesem Stand der Technik nicht das bei zinkbeschichteten Blechen bestehende Problem, dass beim Aufschmelzen des Bleches an den Schnittkanten die Schweissnaht durch aufgeschmolzenes Metall der Beschichtung verunreinigt und dadurch die Schweissnaht eine andere kristallographische Struktur als das angrenzende unbehandelte Blech hat. Im übrigen wäre eine Gefügeveränderung in der Schweissnaht beim Stand der Technik weniger problematisch, weil das Blech bei der Weiterverarbeitung zu Konservendosen nicht derart starken Verformungsbeanspruchungen, wie sie beim Tiefziehen oder Pressen auftreten, ausgesetzt ist, sondern lediglich ausgewalzt wird. Darüber hinaus wird beim Stand der Technik trotz einer geringen Welligkeit der Schnittkanten von etwa 0,01 mm und einem Brennfleck des Laserstrahles von weniger als 0,05 mm ein nach dem Schweissen sich anschliessender Korrosionsschutz mit einem die Schweissnaht abdekkenden Lack für erforderlich gehalten (US-PS 4 315 132).

Schliesslich ist es bekannt, mittels eines Laserstrahls eine Überlappungsschweissung von verzinkten Blechen vorzunehmen. Dabei werden mittels des Laserstrahls, der einen Brennfleck von 0,025 inch im Durchmesser hat, die aufeinanderliegenden Bleche zusammen mit der Zinkbeschichtung an den aufeinanderliegenden Oberflächen aufgeschmolzen. Das dabei verdampfende Zinkdiffundiert in die Schweisszone und verursacht Blasen im schmelzflüssigen Material. Zur Vermeidung dieses Nachteils ist vorgesehen, auf die zu verschweissenden Blechoberflächen vordem Verschweissen ein Flussmittel, wie beispielsweise Eisenoxid, Kupferoxid oder Nickeloxid aufzubringen, um den Dampfdruck des Zinks herabzusetzen. Die besonderen Probleme beim Stumpfschweissen von verzinkten Blechen werden bei diesem Stand der Technik nicht behandelt (US-PS 3 969 604).

Der Erfindung liegt die Aufgabe zugrunde, aus mindestens zwei verzinkten Blechen oder Bändern mit möglichst geringem Aufwand durch Stumpfschweissen ein breiteres, tiefziehfähiges oder pressbares Blech oder Band zu schaffen, dessen Oberfläche auch im Bereich der Schweissnaht eben und korrosionsgeschützt ist.

Diese Aufgabe wird mit dem Verfahren nach Anspruch 1 gelöst.

Bei dem erfindungsgemässen Verfahren erhält man unmittelbar durch das Schweissen nicht nur eine im wesentlichen blechebene Schweissnaht sondern auch eine korrosionsgeschützte Schweissnaht. Es ist deshalb weder erforderlich, nach dem Schweissen die Schweissnaht durch Nachbearbeitung zu ebnen, noch anschliessend mit einem Korrosionsschutz zu versehen. Durch Verwendung des Laserstrahls ist gewährleistet, dass die unmittelbare Wärmezufuhr auf einen sehr schmalen Bereich beschränkt wird, so dass nur eine sehr schmale zinkfreie Zone übrig bleibt, die aufgrund der an sich bekannten Fernschutzwirkung des Zinks der beidseits angrenzenden Bereiche korrosionsgeschützt ist. Da die Schweissfuge über die gesamte Länge allenfalls an einigen Stellen eine maximale Breite von 2 x 0,04 mm hat, kommt das erfindungsgemässe Verfahren ohne Zusatzmaterial (Fülldraht) aus. Die zum Auffüllen der verbleibenden äusserst kleinen Löcher benötigte, von den benachbarten Zonen der Bleche zur Verfügung gestellte Materialmenge vermindert die Dicke des im Vergleich zum Spalt um eine Zehnerpotenz dickeren Bleches praktisch nicht. Für die Weiterverarbeitung des Bleches bedeutet das, dass es ohne mechanische Nachbearbeitung für das Tiefziehen oder Pressen verformbar ist. Für den Gebrauch des Bleches bedeutet das, dass es gegenüber einen mit einem einheitlichen Zinküberzug korrosionsgeschützten Blech wegen der Fernschutzwirkung des Zinks auf die zinkfreie Schweissnaht keine Nachteile hinsichtlich des Korrosionsschutzes hat. Für den Hersteller liegt der Vorteil des erfindungsgemässen Verfahrens darin, dass er aus den von seinen herkömmlichen Verzinkungsanlagen gelieferten Blechen bzw. Bändern, Bleche oder Bänder mehrfacher Breite ohne Qualitätseinbusse im Bereich der Schweissnähte ohne allzu grossen Aufwand herstellen kann.

Um die Wärmebeeinflussung der Zinkschicht in den Randzonen der Schweissnaht möglichst niedrig zu halten, sieht eine Ausgestaltung der Erfindung vor, die Bleche bzw. Bänder auf beiden Seiten der Schweissnaht zu kühlen. Die Kühlung kann z.B. durch Aufblasen von Kühlgas erfolgen. Einen besonders guten Wärmeschutz erhält man, wenn die zu verschweissenden Bleche entlang des gesamten Schweissspaltes in Spannbacken aus wärmeleitfähigem Material, wie beispielsweise Kupfer, eingespannt sind, die gegebenenfalls mittels in ihrem Inneren umlaufender Kühlflüssigkeit gekühlt werden. Im Hinblick auf eine gute Kühlung der Blechoberfläche sowie Planlage des Bleches ist es von Vorteil, wenn die Spannbacken in einer Entfernung von 5 bis 10 mm vom Schweissspalt entfernt am Blech angreifen. Auf diese Weise ist sichergestellt, dass ein Aufschmelzen des Blechmaterials lediglich im Bereich des Brennflecks erfolgt und das flüssige Material sofort wieder erstarrt, sobald es aus dem Brennfleck des Laserstrahls austritt.

Eine gute Kühlung ist besonders wichtig für die Blechunterseite, weil ein Ausfliessen des aufgeschmolzenen Materials aus der Schweissfuge vermieden werden muss. Ein Ausfliessen kann wirksam dadurch verhindertwerden, dass die unter dem Blech angeordneten Teile der Spannbakken besonders stark gekühlt werden.

Als vorteilhaft hatsich erwiesen, wenn unterhalb der zu verschweissenden Bleche eine die Schweissfuge überbrückende Spannvorrichtung verwendet wird, welche im Bereich der Schweissfuge eine tiefe Nut aufweist, in die Inertgas eingeblasen werden kann, um die Schweissnaht unter einer Inertgasatmosphäre zu halten. Dadurch wird nicht nur die Oxydation des Schweissgutes vermieden sondern auch die Kühlung der Blechunterseite unterstützt. Darüber hinaus wird durch einen Gasüberdruck in dieser Nut dem Ausfliessen des aufgeschmolzenen Materials aus der Schweissfuge entgegengewirkt.

Im folgenden wird die Erfindung anhand von zwei Ausführungsbeispielen, die zwei Vorrichtungen zum Stumpfschweissen von Blechen zeigen, näher erläutert.

Das erfindungsgemässe Verfahren eignet sich zum Stumpfverschweissen von dünnem Blech, insbesondere in einem Dickenbereich von 0,5 bis 1,5 mm. Die im wesentlichen rechteckigförmigen Schnittkanten sollen über ihre Länge eine Welligkeit von höchstens 0,04 mm haben. Wenn solche Bleche zum Stumpfschweissen in Berührungskontakt gebracht sind, kann an einzelnen Stellen dergrösste Abstand höchstens 0,08 mm sein.

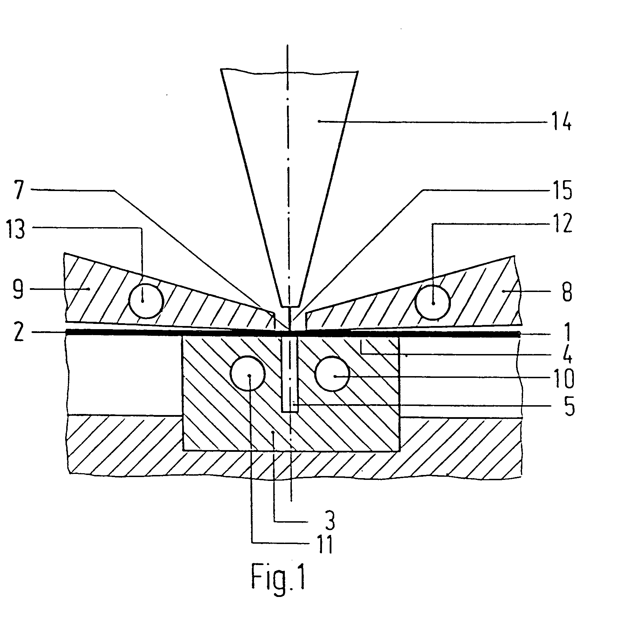

Beim Ausführungsbeispiel der Fig. 1 liegen die stumpf miteinander zu verschweissenden Bleche 1,2 in berührendem Kontakt auf einer Unterlage 3 mit einer ebenen Auflagefläche 4. In der Unterlage 3 ist eine zur Auflagefläche 4 hin offene Längsnut 5 vorgesehen. Die miteinander zu verschweissenden, im wesentlichen rechteckigen Kanten 7 der Bleche 1, 2 liegen im Bereich dieser Längsnut 5. Die Bleche 1, 2 werden mit Spannbacken 8, 9 gegen die Unterlage 3 gedrückt und somit fixiert gehalten. Sowohl die Unterlage 3 als auch die Spannbacken 8, 9 weisen Kanäle 10 bis 13 auf, durch die ein Kühlmittel geleitet wird. In die von den Blechen 1, 2 oben abgeschlossene Längsnut 5 wird Inertgas geleitet, das ebenfalls kühlt und einen gewissen Überdruck in der Längsnut 5 erzeugt.

In Längsrichtung über die Schweissfuge 7 ist eine Laserkanone 14 mit auf die Schweissfuge gerichteten Laserstrahl 15 verfahrbar. Der Laserstrahl 15 hat einen Brennfleck von höchstens 0,2 mm Durchmesser. Dieser Brennfleck ist auf die Mittellinie der Schweissfuge 7 gerichtet.

Die Fahrgeschwindigkeit der Laserkanone 14 über die Schweissfuge 7 und die auf die Schweissfuge übertragene Schweissenergie hängen vor allem von der Dicke des Bleches 1, ab. Beispielsweise bei verzinkten Stahlblechen mit einer Dicke von 0,8 mm, einem Abstand der gekühlten Kupferspannbacken 8, 9 von 3 mm von der Mitte der Schweissfuge 7 und einem Brennfleck des Laserstrahls von weniger als 0,2 mm Durchmesser erzielt man gute Ergebnisse mit einer Fahrgeschwindigkeit der Laserkanone 14 über die Schweissfuge von 2 m/min. Die dabei übertragene Energie beträgt dann etwa 375 J/cm. Die so erhaltene Schweissnaht ist fehlerfrei sowohl hinsichtlich des Korrosionsschutzes als auch hinsichtlich der mechanischen Eigenschaften (Dehnung, Festigkeit), so dass das Blech problemlos auch im Bereich der Schweissnaht umgeformt werden kann.

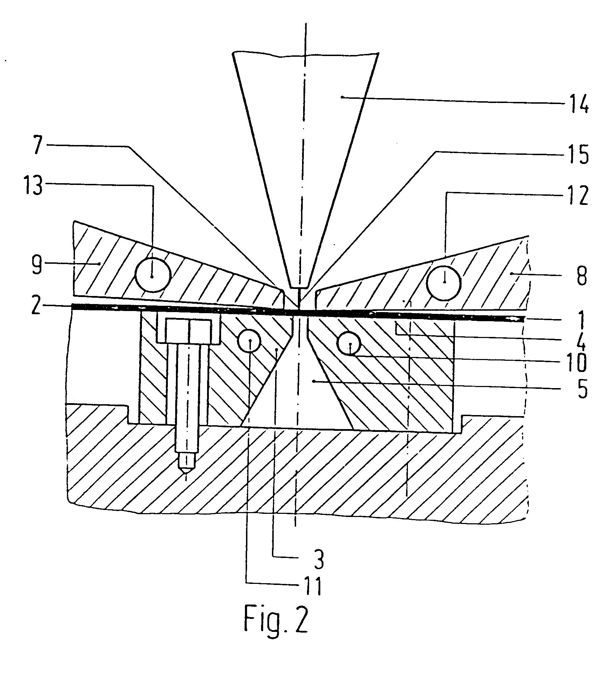

Das Ausführungsbeispiel der Fig. 2 unterscheidet sich von dem der Fig. 1 lediglich in der Gestaltung derAuflage, die in diesem Fall nicht brükkenartig sondern zweigeteilt ist. Die einzelnen Teile sind an einem Träger angeschraubt. Die nach unten trichterartige Erweiterung der Längsnut hat den Zweck, die Reflexion von Spritzern gegen die Schweissnaht zu verhindern.

## Patentansprüche

1. Verfahren zum Herstellen tiefziehfähiger oder pressbarer verzinkter Stahlbleche mit rechteckigen Schnittkanten durch Stumpfschweissen mittels Laserstrahl, mit folgenden Merkmalen:
a) Die Bleche werden mit einer Welligkeit der Schnittkanten in der Blechebene von höchstens 0,04 mm hergestellt,
b) die Bleche werden beim Stumpfschweissen an diesen Schnittkanten in Berührungskontakt gehalten,
c) mit dem Laserstrahl, dessen die welligen Schnittkanten erfassender Brennfleck höchstens einen Durchmesser von 0,2 mm hat, werden in einer an die Schnittkanten angrenzenden sehr schmalen Zone die Blechoberflächen von Zink befreit und die Bleche ohne Zusatzmaterial miteinander verschmolzen,
d) die miteinander zu verschweissenden Bleche bzw. Bänder werden beidseitig der Schweissnaht und auf deren gesamter Länge während des Schweissens derart gekühlt, dass die durch das Schweissen beeinflusste Zone eine Breite von weniger als 1 mm hat,
e) die Dicke der Stahlbleche ist größer als 0,5 mm.

2. Verfahren nach Anspruche 1, dadurch gekennzeichnet, dass die Schweissnaht auf der Rückseite unter einer Schutzgasatmosphäre gehalten wird.

3. Verfahren nach einem der Ansprüche 1, 2, dadurch gekennzeichnet, dass die Schweissfuge auf der Rückseite (Unterseite) mit Überdruck beaufschlagt wird.

4. Verfahren nach einem der Ansprüche 1-3, dadurch gekennzeichnet, dass die miteinander zu verschweissenden Bleche durch gekühlte Schweissbacken, die unmittelbar neben der Schweissfuge angreifen, während des Schweissens in Position gehalten werden.

5. Verfahren zum Herstellen von durch Pressen oder Tiefziehen geformten Formkörpern unter Anwendung des Verfahrens nach einem der Ansprüche 1 bis 4, dadurch gekennzeichnet, dass die Verformung nach dem Stumpfschweissen der Stahlbleche oder Stahlbänder erfolgt.

## Claims

1. A process for the production of deep-drawable or pressable galvanized steel plates having rectangular cut edges by butt welding by means of a laser beam, the process having the following features:
a) The plates are produced with a maximum waviness of the cut edges of 0.04 mm in the plane of the plate,
b) the plates are held in direct contact at such cut edges during butt welding,
c) by the laser beam, whose spot covering the wavy and cut edges has a maxi mum diameter of 0.2 mm, the plate surfaces are freed from zinc in a very narrow zone adjoining the cut edges, and the plates are interfused without a filler,
d) the plates or strips to be welded to one another are so cooled over their whole length on both sides of the welding groove during welding that the zone influenced by the welding has a width of less than 1 mm,
e) the thickness of the steel plates is greater than 1 mm.

2. A process according to claim 1, characterized in that the weld seam is kept under a protective gas atmosphere on the rear side.

3. A process according to one of claims 1,2, characterized in that the welding groove experiences excess pressure on the rear side (underside).

4. A process according to one of clai ms 1 to 3, characterized in that the plates to be welded together are held in position during welding by cooled welding jaws engaging immediately adjacent the welding groove.

5. A process for the production of mouldings shaped by pressing or deep drawing, using the process according to one of claims 1 to 4, characterized in that forming takes place after the butt welding of the steel plates or steel strips.

## Revendications

1. Procédé pour fabriquer des tôles d'acier galvanisées à arêtes de coupe rectangulaires aptes à l'emboutissage profond ou compressibles par soudage bord à bord au moyen d'un rayon laser, avec les caractéristiques suivantes:
a) les tôles sont fabriquées avec ondulation des arêtes de coupe dans le plan de la tôle d'au plus 0,04 mm,
b) les tôles sont maintenues en contact d'attouchement sur ces arêtes de coupe lors du soudage bord à bord,
c) les surfaces des tôles sont dégarnies de zinc dans une zone très étroite adjacente aux arêtes de coupe et les tôles sont fondues ensemble sans matériau d'apport, au moyen du rayon laser dont la tache de brûlure touchant les arêtes de coupe ondulées a au plus un diamètre de 0,2 mm,
d) on refroidit les tôles ou les feuillards à souder l'un à autre, des deux côtés du cordon de soudure et sur toute leur longueur, pendant le soudage, de telle manière que la zone influencée par le soudage a une largeur inférience à 1 mm,
e) l'épesseur des tôles est plus de 0,5 mm.

2. Procédé selon revendication 1, caractérisé par le fait que le cordon de soudure est maintenue sous une atmosphère de gaz inerte sur la face arrière.

3. Procédé selon l'une des reventications 1,2, caractérisé en ce que la rainure de soudage est soumise à une surpression sur sa face arrière ( face infériere ).

4. Procédé selon l'une des revendications 1 à 3, caractérisé par le fait que les tôles à souder ensemble sont maintenues en position, pendant le soudage, par des mâchoires de serrage refroidies qui viennent en prise directement à côté de la rainure de soudage.

5. Procédé pour la fabrication de corps de forme formés par compression ou par emboutissage profond en utilisant le procédé selon l'une des reventications 1 à 4, caractérisé par le fait que la déformation a lieu après le soudage bord à bord des tôles d'acier ou des feuillards d'acier.
